# NEUE EUROPÄISCHE PATENTSCHRIFT

(11) **EP 2 744 691 B2**
(45) Veröffentlichungstag und Bekanntmachung des Hinweises auf die Entscheidung über den Einspruch: **16.06.2021**
(45) Hinweis auf die Patenterteilung: 01.07.2015
(21) Anmeldenummer: 12743463.7
(22) Anmeldetag: 07.08.2012
(51) Int. Cl.: B60T 7/04, B60T 8/40

(54) **BREMSBETÄTIGUNGSEINHEIT**
BRAKE ACTUATING UNIT
UNITÉ D'ACTIONNEMENT DE FREIN

(30) Priorität: 15.08.2011 DE 102011080957; 26.08.2011 DE 102011081656; 27.07.2012 DE 102012213216
(43) Veröffentlichungstag der Anmeldung: 25.06.2014
(73) Patentinhaber: Continental Teves AG & Co. OHG, 60488 Frankfurt am Main (DE)
(72) Erfinder: FEIGEL, Hans-Jörg, 61191 Rosbach (DE); TARANDEK, Kristijan, 63263 Neu-Isenburg (DE)
(74) Vertreter: Schlosser, Martin
(86) Internationale Anmeldenummer: PCT/EP2012/065404
(87) Internationale Veröffentlichungsnummer: WO 2013/023953

(56) Entgegenhaltungen:
- WO-A1-01/08952
- DE-A1- 4 316 582
- DE-A1-102009 019 802
- DE-A1-102009 033 499
- DE-A1-102010 003 081
- DE-A1-102010 003 082
- JP-A- H10 329 698
- US-A1- 2010 138 126
- US-B1- 6 305 758
- US-B2- 6 969 128

## Beschreibung

Die Erfindung betrifft eine Bremsbetätigungseinheit gemäß dem Oberbegriff von Anspruch 1 sowie eine Bremsanlage mit einer solchen Bremsbetätigungseinheit.

US 6 305 758 B1 offenbart eine Bremsbetätigungseinheit für eine Brake-by-wire Kraftfahrzeugbremsanlage mit einem Gehäuse, einer hydraulischen Zylinder-Kolben-Anordnung mit einem in dem Gehäuse verschiebbar geführten Betätigungskolben. Der Kolben der hydraulischen Zylinder-Kolben-Anordnung ist durch einen Elektromotor verschiebbar und die Ventil-Anordnung und die Druckbereitstellungseinrichtung sind innerhalb des Gehäuses angeordnet.

Aus der DE 10 2010 040 097 A1 ist eine Bremsanlage für Kraftfahrzeuge bekannt, welche ein Bremspedal zum Betätigen einer Pedalentkopplungseinheit mit einem Hauptbremszylinder, eine elektrohydraulische Druckbereitstellungseinrichtung, die als eine hydraulische Zylinder-Kolben-Anordnung ausgebildet ist, deren Kolben von einem Elektromotor unter Zwischenschaltung eines Rotations-Translationsgetriebes betätigbar ist, und eine Druckmodulationseinheit, die pro Radbremse ein Einlassventil sowie ein Auslassventil zum Einstellen radindividueller Bremsdrücke aufweist, umfasst. Dabei ist die Bremsanlage modular aufgebaut, d.h. in einem ersten Modul ist der Hauptbremszylinder angeordnet, in einem zweiten Modul ist die Druckbereitstellungseinrichtung angeordnet und in einem dritten Modul sind die Ventile zur Bremsdruckmodulation sowie die Ventile zum Trennen bzw. Verbinden der Radbremsen mit dem Hauptbremszylinder bzw. der Druckbereitstellungseinrichtung angeordnet. Alle Module sind dabei als eigenständige Einheiten ausgeführt. In der Bremsanlage sind die Achse des Elektromotors, die Längsachse der Druckbereitstellungseinrichtung und die Längsachse des Hauptbremszylinders parallel angeordnet. Das Dokument US 2007/0108836 A1 offenbart ein elektrohydraulisches Bremssystem für Kraftfahrzeuge, bei welchem eine Vielzahl von Ventilen in einem Ventilblock integriert ist und ein Elektromotor an einer Seitenfläche des Ventilblocks angebracht ist.
Der vorliegenden Erfindung liegt die Aufgabe zugrunde, eine kompakte Bremsbetätigungseinheit für eine "Brake-by-wire"-Bremsanlage für Kraftfahrzeuge bereitzustellen.

Diese Aufgabe wird erfindungsgemäß durch eine Bremsbetätigungseinheit gemäß Anspruch 1 gelöst.

Der Erfindung liegt der Gedanke zugrunde, die erste, durch den Fahrzeugführer betätigbare Zylinder-Kolben-Anordnung, die Druckbereitstellungseinrichtung und die Ventil-Anordnung in demselben Gehäuse anzuordnen, wobei die Achse des Elektromotors der Druckbereitstellungseinrichtung im Wesentlichen senkrecht zur Längsachse der ersten Zylinder-Kolben-Anordnung angeordnet ist

Ein Vorteil der Erfindung liegt in einer kompakten Integration von Bremsbetätigung und Bremsdruckmodulation in einem Modul. Hierdurch werden Gewichtsersparnis, einfache Fertigbarkeit und gute Anschlussmöglichkeit für elektrische und hydraulische Verbindungen ermöglicht. Weiterhin wird durch die orthogonale Anordnung eine geringe Gesamtbaulänge der Bremsbetätigungseinheit erzielt, welche für gute Eigenschaften in einer Crashsituation vorteilhaft ist, so dass das Verletzungsrisiko für den Fahrzeugführer verringert wird. Ebenso ermöglicht die kompakte, integrierte Anordnung verbesserte Adaptionsmöglichkeiten der Bremsbetätigungseinheit an unterschiedlichste Fahrzeugpackagings.

Bevorzugt ist auch die Längsachse der zweiten Zylinder-Kolben-Anordnung der Druckbereitstellungseinrichtung im Wesentlichen senkrecht zu der Längsachse der ersten Zylinder-Kolben-Anordnung angeordnet. Hierdurch kann erreicht werden, dass die Ausdehnung des Gehäuses in Fahrtrichtung (Richtung der Längsachse der ersten Zylinder-Kolben-Anordnung) im Wesentlichen durch die Mindestlänge der ersten Zylinder-Kolben-Anordnung bestimmt wird und diese nicht wesentlich übersteigt. Besonders bevorzugt sind die Achsen des Elektromotors und der zweiten Zylinder-Kolben-Anordnung fluchtend angeordnet. Ein weiteres Getriebe, z.B. Rotations-Rotationsgetriebe, neben dem Rotations-Translationsgetriebes der Druckbereitstellungseinrichtung ist dann nicht notwendig.

Gemäß einer Weiterbildung der Erfindung umfasst die Bremsbetätigungseinheit eine Simulationseinrichtung, welche in der "Brake-by-wire"-Betriebsart dem Fahrzeugführer ein angenehmes Bremspedalgefühl vermittelt, wobei dieser Bremspedalgefühlsimulator zumindest teilweise in dem Gehäuse angeordnet ist. Die Längsachse des Bremspedalgefühlsimulators ist im Wesentlichen senkrecht zu der Längsachse der zweiten Zylinder-Kolben-Anordnung angeordnet, um eine kompakte Bauform zu erhalten. Besonders bevorzugt ist der Bremspedalgefühlsimulator hydraulisch ausgeführt und umfasst eine dritte Zylinder-Kolben-Anordnung mit zumindest einem Simulatorkolben. Vorteilhafterweise ist die Wirkung des Bremspedalgefühlsimulators mittels eines Simulatorfreigabeventils zu- und abschaltbar.

Hydraulische Anschlüsse der Bremsbetätigungseinheit sind an derselben Seitenfläche des Gehäuses der Bremsbetätigungseinheit angeordnet, an welcher der Elektromotor angeordnet ist. Durch die Anordnung der hydraulischen Anschlüsse und des Elektromotors senkrecht zur Längsachse der ersten Zylinder-Kolben-Anordnung wird der Platzbedarf in Fahrtrichtung für die verbaute Bremsbetätigungseinheit geringer.

Gemäß einer bevorzugten Ausführungsform der erfindungsgemäßen Bremsbetätigungseinheit umfasst diese eine Bremspedalbetätigungsweg-Ermittlungseinrichtung, welche ebenso zumindest teilweise in das Gehäuse integriert ist. Besonders bevorzugt wird die Bremspedalbetätigungsweg-Ermittlungseinrichtung durch einen Wegsensor gebildet, der den Weg des Betätigungskolbens erfasst.

Bevorzugt umfasst die Bremsbetätigungseinheit einen den Druck der ersten Zylinder-Kolben-Anordnung erfassenden Drucksensor sowie einen weiterer Drucksensor, der den Druck der Druckbereitstellungseinrichtung erfasst, wobei auch die Drucksensoren zumindest teilweise in das Gehäuse integriert sind.

Der Elektromotor ist bevorzugt an einer ersten Seitenfläche des Gehäuses befestigt, wobei die Achse des Elektromotors im Wesentlichen senkrecht zur ersten Seitenfläche angeordnet ist. Die erste Seitenfläche ist folglich in etwa parallel zu der Längsachse der ersten Zylinder-Kolben-Anordnung ausgerichtet. Die Größe der ersten Seitenfläche ist besonders bevorzugt derart groß ausgeführt, dass der Elektromotor bzw. seine Befestigungsseite auf der ersten Seitenfläche des Gehäuses vollständig abgedichtet werden kann. Da die hydraulischen Anschlüsse der Bremsbetätigungseinheit zur Minimierung des erforderlichen Platzbedarf der Bremsbetätigungseinheit bevorzugt an derselben Seitenfläche des Gehäuses der Bremsbetätigungseinheit angeordnet sind wie der Elektromotor, sind die hydraulischen Anschlüsse, z.B. zum Anschließen der Radbremsen, vorteilhafterweise auf der ersten Seitenfläche angeordnet.

Gemäß der erfindungsgemäßen Bremsbetätigungseinheit ist die Ventil-Anordnung auf einer dem Elektromotor entgegengesetzten, zweiten Seitenfläche des Gehäuses angeordnet.

Bevorzugt ist/sind auch die Bremspedalbetätigungsweg-Ermittlungseinrichtung und/oder die Drucksensoren auf der zweiten Seitenfläche angeordnet.

Bevorzugt ist eine elektronische Steuer- und Regeleinheit mit einem Steuergerätgehäuse vorgesehen, welche an der dem Elektromotor entgegengesetzten, zweiten Seitenfläche angeordnet ist, um eine einfache elektrische oder magnetische Verbindung zwischen der Ventil-Anordnung und/oder der Bremspedalbetätigungsweg-Ermittlungseinrichtung und/oder den Drucksensoren und der elektronischen Steuer- und Regeleinheit zu ermöglichen. Das Steuergerätgehäuse bedeckt daher besonders bevorzugt zumindest einen Teil der Ventil-Anordnung und/oder der Bremspedalbetätigungsweg-Ermittlungseinrichtung und/oder der Drucksensoren. Das Steuergerätgehäuse erstreckt sich bevorzugt in zumindest einer Richtung über die zweite Seitenfläche des Gehäuses hinaus, um die platzsparende Anbringung eines elektrischen Anschlusselements zu ermöglichen.

Die elektronische Steuer- und Regeleinheit dient bevorzugt der Ansteuerung der Druckbereitstellungseinrichtung und der Ventil-Anordnung, weshalb der elektronischen Steuer- und Regeleinheit besonders bevorzugt die Ausgangssignale der Drucksensoren und der Bremspedalbetätigungsweg-Ermittlungseinrichtung zugeführt werden.

Die elektrischen Verbindungen zwischen der Druckbereitstellungseinrichtung, insbesondere dem Elektromotor, und der elektronischen Steuer- und Regeleinheit verlaufen bevorzugt durch das Gehäuse.

Gemäß einer bevorzugten Ausführungsform der erfindungsgemäßen Bremsbetätigungseinheit ist an dem Steuergerätgehäuse zumindest ein elektrisches Anschlusselement angeordnet, vorteilhafterweise angespritzt, welches sich benachbart einer dritten, der Druckstange entgegengesetzten Seitenfläche des Gehäuses erstreckt. Diese Anordnung des Anschlusselements ist platzsparend und ermöglicht einen elektrischen Anschluss, z.B. durch eine Steckverbindung, parallel zur dritten Seitenfläche, also in Fahrtrichtung vor dem Gehäuse. Besonders bevorzugt erstreckt sich das elektrische Anschlusselement parallel zur Achse des Elektromotors, da in dieser Richtung aufgrund des Elektromotors eine ausreichende Zugänglichkeit der Bremsbetätigungseinheit gegeben ist.

Bevorzugt ist an einer vierten Seitenfläche des Gehäuses ein unter Atmosphärendruck stehender Druckmittelvorratsbehälter unmittelbar befestigt. Alternativ ist an der vierten Seitenfläche des Gehäuses ein hydraulischer Anschluss für einen unter Atmosphärendruck stehender Druckmittelvorratsbehälter vorgesehen.

Gemäß einer Weiterbildung der Erfindung ist an dem Steuergerätgehäuse ein weiteres elektrisches Anschlusselement angeordnet, welches besonders bevorzugt zur elektrischen Energieversorgung der elektronischen Steuer- und Regeleinheit dient, wobei sich dieses Anschlusselement zwischen dem Gehäuse und dem Druckmittelvorratsbehälter erstreckt. Das Anschlusselement erstreckt sich also vorteilhafterweise benachbart der vierten Seitenfläche des Gehäuses. Hierdurch ist das Anschlusselement platzsparend angeordnet und wird durch das Gehäuse und den Druckmittelvorratsbehälter geschützt. Um eine noch kleinere Bremsbetätigungseinheit zu erzielen, ist in dem Gehäuse und/oder in dem Druckmittelvorratsbehälter eine Ausnehmung zur Durchführung des Anschlusselements vorgesehen. Besonders bevorzugt erstreckt sich das weitere elektrische Anschlusselement ebenfalls parallel zur Achse des Elektromotors. Alternativ ist es bevorzugt, dass sich das weitere Anschlusselement durch das Gehäuse oder durch den Druckmittelvorratsbehälter erstreckt.

Um die Ausdehnung der Bremsbetätigungseinheit in Richtung senkrecht zur Längsachse der ersten Zylinder-Kolben-Anordnung möglichst gering zu halten, ragt die zweite Zylinder-Kolben-Anordnung der Druckbereitstellungseinrichtung bevorzugt zumindest teilweise aus dem Gehäuse heraus. Besonders bevorzugt wird der herausragende Teil der zweiten Zylinder-Kolben-Anordnung von dem Steuergerätgehäuse abgedeckt oder erstreckt sich durch das Steuergerätgehäuse, wodurch wieder der benötigte Gesamtbauraum reduziert wird.

Zur einfachen Anbringung der Bremsbetätigungseinheit an dem Kraftfahrzeug umfasst das Gehäuse der Bremsbetätigungseinheit bevorzugt auf seiner Druckstangenseitigen Seitenfläche ein Befestigungselement, vorteilhafterweise eine Befestigungsplatte, mittels welchem das Gehäuse an einer Spritzwand des Kraftfahrzeugs mechanisch befestigbar ist.

Die Erfindung betrifft auch eine Bremsanlage mit einer erfindungsgemäßen Bremsbetätigungseinheit. Bevorzugt wird die Bremsbetätigungseinheit in einer Bremsanlage für Kraftfahrzeuge eingesetzt, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsbetätigungseinheit aus einer ersten Ansicht,
- Fig. 2: das erste Ausführungsbeispiel der Fig. 1 aus einer zweiten Ansicht senkrecht zu der ersten Ansicht,
- Fig. 3: ein zweites Ausführungsbeispiel einer erfindungsgemäßen Bremsbetätigungseinheit aus einer ersten Ansicht, und
- Fig. 4: das zweite Ausführungsbeispiel der Fig. 3 aus einer zweiten Ansicht senkrecht zu der ersten Ansicht.

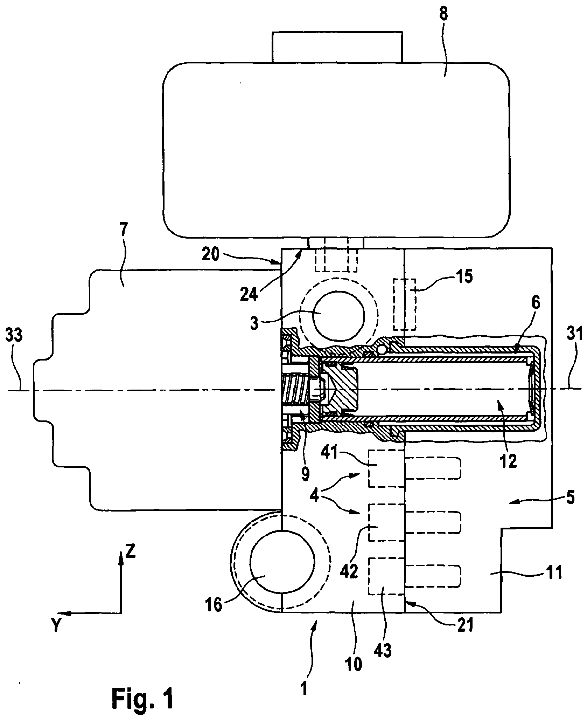

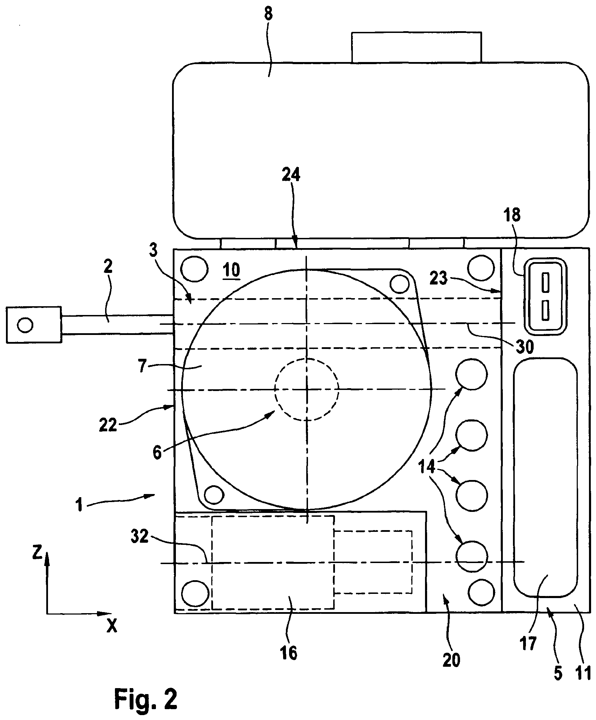

In Fig. 1 und 2 ist ein erstes Ausführungsbeispiel einer erfindungsgemäßen Bremsbetätigungseinheit für eine Kraftfahrzeugbremsanlage vom Typ "Brake-by-wire" schematisch dargestellt. Bremsbetätigungseinheit 1 umfasst eine mittels einer Druckstange (Pedalstange) 2 von einem Fahrzeugführer betätigbare hydraulische Zylinder-Kolben-Anordnung 3 mit einem in dem Gehäuse 10 der Bremsbetätigungseinheit entlang der Längsachse 30 der ersten Zylinder-Kolben-Anordnung verschiebbar geführten Betätigungskolben (nicht dargestellt), der einen hydraulischen Druckraum begrenzt, an den mittels hydraulischer Verbindungen nicht dargestellte Radbremsen der Kraftfahrzeugbremsanlage anschließbar sind. Zylinder-Kolben-Anordnung 3 stellt z.B. einen Tandemhauptzylinder dar. Die Zylinder-Kolben-Anordnung 3 dient z.B. der Druckbeaufschlagung der Radbremsen durch den Fahrer in einer Rückfallbetriebsart der Bremsanlage, wenn die Radbremsen mit dem Druckraum der Zylinder-Kolben-Anordnung 3 hydraulisch verbunden sind. Längsachse 30 ist im Wesentlichen parallel zur Fahrtrichtung X des Kraftfahrzeugs angeordnet.

Zumindest teilweise innerhalb des Gehäuses 10 ist eine elektrisch steuerbare Druckbereitstellungseinrichtung 6 angeordnet, welche als eine zweite hydraulische Zylinder-Kolben-Anordnung 12 ausgeführt ist, deren Kolben durch einen Elektromotor 7 mittels eines Rotations-Translationsgetriebes 9 entlang der Längsachse 31 der zweiten Zylinder-Kolben-Anordnung 12 verschiebbar ist. In einer "Brake-by-wire"-Betriebsart der Bremsanlage können die Radbremsen mittels des Druckes der Druckbereitstellungseinrichtung 6 betätigt werden. Hierzu ist der Elektromotor 7 nach Maßgabe einer Bremspedalbetätigung ansteuerbar. Der elektromechanische Aktuator aus Elektromotor 7 und Rotations-Translationsgetriebes 9 gewährleistet eine translatorische Bewegung des Kolbens der zweiten Zylinder-Kolben-Anordnung 12. Das Getriebe 9 ist beispielsgemäß als ein Kugelgewindetrieb oder Rollengewindetrieb ausgebildet.

Weiterhin ist zumindest teilweise in dem Gehäuse 10 eine mehrere Ventile 41, 42, 43 umfassende Ventil-Anordnung 4 angeordnet, mittels welcher radindividuelle Bremsdrücke einstellbar sind und die Radbremsen von bzw. mit der ersten Zylinder-Kolben-Anordnung 3 oder von bzw. mit der Druckbereitstellungseinrichtung 6 trennbar oder verbindbar sind.

Die erste Zylinder-Kolben-Anordnung 3, die Ventilanordnung 4 und die Druckbereitstellungseinrichtung 6 sind ganz oder mindestens zum Teil innerhalb des einzigen gemeinsamen Gehäuses 10 angeordnet, wobei die Achse 33 des Elektromotors 7 der Druckbereitstellungseinrichtung 6 senkrecht oder annähernd senkrecht zur Längsachse 30 der ersten Zylinder-Kolben-Anordnung 3 angeordnet ist.

Der Elektromotor 7 ist direkt an der Seitenfläche 20 des Gehäuses 10 an dem Gehäuse 10 befestigt. Die Mindestausdehnung der Seitenfläche 20 ist derart ausgeführt, dass die Befestigungsstirnseite des Elektromotors 7 vollständig auf dem Gehäuse 10 abgedichtet werden kann.

Die Achse 31 der zweiten Zylinder-Kolben-Anordnung 12 ist auch orthogonal oder annähernd orthogonal zur Längsachse 30 der ersten Zylinder-Kolben-Anordnung 3, d.h. entlang der Richtung Y, angeordnet. Beispielsgemäß sind die Achse 33 des Elektromotors 7 und die Achse 31 der zweiten Zylinder-Kolben-Anordnung fluchtend angeordnet.

Bremsbetätigungseinheit 1 umfasst weiterhin eine elektronische Steuer- und Regeleinheit 5 (ECU) mit einem Steuergerätgehäuse 11 und einen unter Atmosphärendruck stehender Druckmittelvorratsbehälter (Bremsflüssigkeitsbehälter) 8.

Der Druckmittelvorratsbehälter 8 kann unmittelbar auf dem Gehäuse 10 befestigt sein. Alternativ kann an dem Gehäuse 10 mindestens ein Anschluss für den Druckmittelvorratsbehälter 8 angeordnet sein. Der Druckmittelvorratsbehälter 8 bzw. die Anschlüsse für den Druckmittelvorratsbehälter 8 sind vorteilhafterweise an der oberen Seitenfläche 24 (in Z-Richtung oberhalb der Seitenflächen 20, 21, 22, 23) des Gehäuses 10 angeordnet.

Die elektronische Steuer- und Regeleinheit 5 dient der Ansteuerung der Druckbereitstellungseinrichtung 6 und der Ventil-Anordnung 4 und ist an der dem Elektromotor 7 entgegengesetzten Seitenfläche 21 des Gehäuses 10 angeordnet. Die elektrischen Verbindungen zwischen dem Elektromotor 7 und der Steuer- und Regeleinheit 5, z.B. zur Ansteuerung des Elektromotors oder zur Übertragung von (Sensor)Signalen, erstrecken sich zum Schutz der elektrischen Verbindungen vorteilhafterweise durch das Gehäuse 10.

Die Ventilanordnung 4 ist vorteilhafterweise ebenfalls auf der dem Elektromotor 7 entgegengesetzten Seite 21 des Gehäuses 10 angeordnet, so dass eine einfache elektrische oder magnetische Verbindung zwischen Ventilanordnung 4 und Steuer- und Regeleinheit 5 möglich ist. Die gesamte oder zumindest ein Teil der Ventilanordnung 4 wird von dem Steuergerätgehäuse 11 abgedeckt.

Zur Erfassung der Bremspedalbetätigung umfasst die Bremsbetätigungseinheit 1 eine Wegsensorik (Bremspedalbetätigungsweg-Ermittlungseinrichtung) 15 (z.B. einen Weg- oder Positionssensor) zur Erfassung der Betätigung des Bremspedals bzw. der Druckstange 2 bzw. der ersten Zylinder-Kolben-Anordnung 3. Wegsensorik 15 ist vorteilhafterweise ganz oder teilweise im Gehäuse 10 integriert und an der Seitenfläche 21 des Gehäuses 10 angeordnet. So ist eine einfache elektrische oder magnetische Verbindung zwischen der Wegsensorik 15 und der Steuer- und Regeleinheit 5 möglich. Wegsensorik 15 wird z.B. von dem Steuergerätgehäuse 11 abgedeckt.

Weiterhin ist in dem Gehäuse 10 eine Drucksensorik (nicht dargestellt) angeordnet. Diese umfasst z.B. mindestens einen Drucksensor zur Erfassung eines Druckes der ersten Zylinder-Kolben-Anordnung 3 sowie einen Drucksensor zur Erfassung eines Druckes der Druckbereitstellungseinrichtung 6. Optional sind weitere Drucksensoren zur Erfassung der Drücke in den Bremskreisen oder Radbremskreisen vorhanden. Vorteilhafterweise sind die Drucksensoren parallel zwischen den Ventilen 41, 42, 43 der Ventilanordnung 4 angeordnet. Außerdem die Drucksensorik vorteilhafterweise von dem Steuergerätgehäuse 11 abgedeckt.

Auch umfasst die Bremsbetätigungseinheit 1 weiterhin eine Wegsensorik (z.B. einen Weg- oder Positions- oder Winkelsensor, nicht dargestellt) zur Erfassung einer Lage/Position des Elektromotors 7 bzw. des Kolben der zweiten Zylinder-Kolben-Anordnung 12. Z.B. ist ein der Erfassung der Rotorlage des Elektromotors 7 dienender Rotorlagensensor vorgesehen. Auch diese Wegsensorik ist ganz oder teilweise im Gehäuse 10 integriert und an der Seitenfläche 21 des Gehäuses 10 angeordnet. Vorteilhafterweise wird die Wegsensorik von dem Steuergerätgehäuse 11 abgedeckt.

Der Steuer- und Regeleinheit 5 werden die Ausgangssignale der Drucksensorik, der Bremspedalbetätigungsweg-Ermittlungseinrichtung 15 und des Rotorlagensensors zugeführt.

Das Gehäuse 10 weist zur mechanischen Befestigung mit der Spritzwand beispielsgemäß an der Druckstangenseitigen Seitenfläche 22 des Gehäuses 10 eine Adapterplatte (nicht dargestellt) auf. Die sich innerhalb des Gehäuses 10 in Fahrtrichtung X erstreckende ersten Zylinder-Kolben-Anordnung 3 verläuft somit im montierten Zustand der Bremsbetätigungseinheit 1 orthogonal oder annähernd orthogonal zur Spritzwand des Fahrzeugs.

Beispielsgemäß ragt ein Teil der Zylinder-Kolben-Anordnung 12 der Druckbereitstellungseinrichtung 6 aus dem Gehäuse 10 heraus und wird von dem Steuergerätgehäuse 11 abgedeckt, wodurch eine weitere Bauraumverringerung erreicht wird. Alter kann sich die Zylinder-Kolben-Anordnung 12 auch durch das Steuergerätgehäuse 11 hindurch erstrecken.

Die hydraulischen Anschlüsse 14 der Bremsbetätigungseinheit 1, z.B. für die Verbindungen zu den Radbremsen, sind auf der Seitenfläche 20 des Gehäuses angeordnet, auf welcher auch der Elektromotor 7 angeordnet ist. Die hydraulischen Anschlüsse 14 führen so an dieser Stelle zu keinem wesentlich größeren Bauraumbedarf der Bremsbetätigungseinheit in Y-Richtung.

Die elektronische Steuer- und Regeleinheit 5 mit ihrem Steuergerätgehäuse 11 ist an der Seitenfläche 21 des Gehäuses 10 angeordnet. Dabei erstreckt sich das Steuergerätgehäuse 11 beispielsgemäß in X-Richtung über die Seitenfläche 21 hinaus.

An der Steuer- und Regeleinheit 5 bzw. an deren Gehäuse 11 sind ein oder mehrere elektrische Anschlusselemente 17, 18 angeordnet, z.B. durch Anspritzen. Die Anschlusselemente sind beispielsgemäß als Anschlussbuchsen 17, 18 zur Aufnahme von entsprechenden Steckelementen ausgeführt. Die elektrischen Anschlusselemente 17, 18 sind beispielsgemäß an dem über die Seitenfläche 21 hinausstehenden Bereich des Steuergerätgehäuses 11 angeordnet. Der elektrische Stecker 17 dient z.B. zum Anschluss einer Daten- oder Busverbindung zur Signalübertragung an ein anderes Steuergerät oder zur Verbindung mit einem CAN-Bus. Das Anschlusselement 18 ist z.B. zur elektrischen Stromversorgung der Steuer- und Regeleinheit 5 geeignet.

Die Anschlusselemente 17, 18 sind beispielsgemäß (in Fahrtrichtung X) vor dem Gehäuse 10 seitlich in das entsprechend überstehende Gehäuse 11 des Steuergerätes 5 einzustecken. Die Einsteckrichtung der Anschlusselemente 17, 18 ist in Richtung parallel der Elektromotorachse 33 (Y-Richtung) ausgerichtet. Die Anschlusselemente 17, 18 sind also neben der Seitenfläche 23 und unterhalb des Bremsflüssigkeitsbehälters 8 angeordnet und die Einsteckrichtung ist parallel zur Seitenfläche 23 (auf den Betrachter zu in Fig. 2).

Vorteilhafterweise umfasst das Bremsbetätigungsmodul 1 einen Bremspedalgefühlsimulator 16, welcher in der "Brake-by-wire"-Betriebsart dem Fahrzeugführer ein angenehmes Bremspedalgefühl vermittelt. Bremspedalgefühlsimulator 16 erstreckt sich ganz oder teilweise innerhalb des Gehäuses 10. Alternativ kann der Bremspedalgefühlsimulator als eigenständiges Modul, welches auf das Gehäuse 10 aufsteckbar ist, ausgeführt sein. Die Längsachse 32 des Bremspedalgefühlsimulators 16 ist beispielsgemäß im Wesentlichen senkrecht zu der Längsachse 31 der zweiten Zylinder-Kolben-Anordnung 12 und parallel zur Längsachse 30 der ersten Zylinder-Kolben-Anordnung 3 angeordnet.

Der Bremspedalgefühlsimulator 16 ist vorteilhafterweise hydraulisch mit zumindest einem in einem Zylinder verschiebbar geführten Simulatorkolben ausgeführt. Z.B. umfasst der Bremspedalgefühlsimulator 16 zumindest einen Simulatorkolben, eine hydraulische Simulatorkammer, welche mit einem Druckraum der ersten Zylinder-Kolben-Anordnung 3 verbunden oder verbindbar ist, und ein elastisches Element (z.B. eine Feder).

Vorteilhafterweise ist die Wirkung des Bremspedalgefühlsimulators 16 mittels eines Simulatorfreigabeventils zu- und abschaltbar ausgeführt.

Durch die beispielsgemäße Anordnung von Zylinder-Kolben-Anordnung 3, Druckbereitstellungseinrichtung 6, Ventil-Anordnung 4, Steuer- und Regeleinheit 5, der hydraulischen Anschlüsse 14 und der elektrischen Anschlusselemente 17, 18 ist die maximale Ausdehnung des Gehäuses 10 in Fahrtrichtung (Richtung X) im Wesentlichen durch die Mindestlänge der Zylinder-Kolben-Anordnung 3 bestimmt ist.

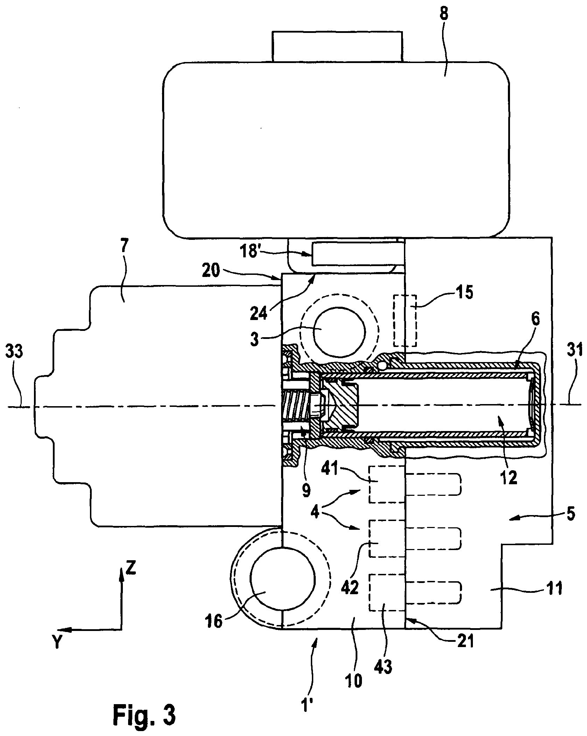

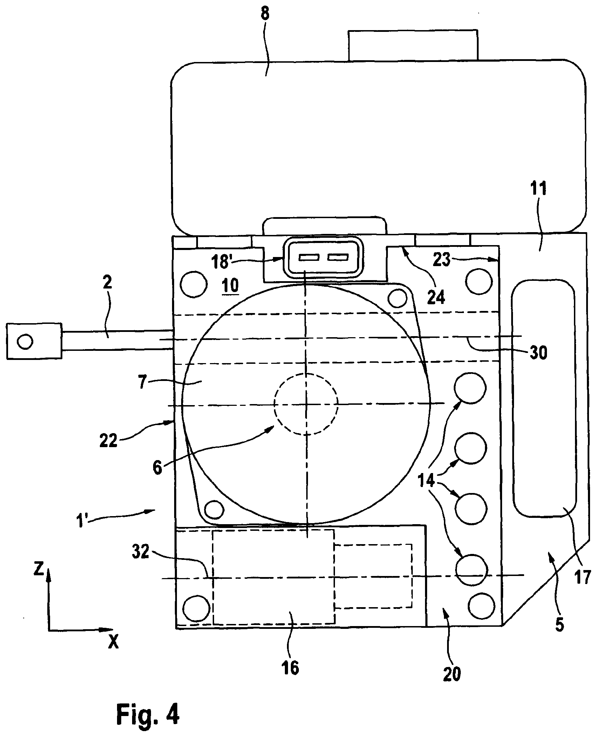

In Fig. 3 und 4 ist ein zweites Ausführungsbeispiel einer erfindungsgemäßen Bremsbetätigungseinheit schematisch dargestellt. Das zweite Ausführungsbeispiel entspricht weitest gehend dem ersten Ausführungsbeispiel. So umfasst Bremsbetätigungsmodul 1' eine von einer Druckstange 2 betätigbare erste Zylinder-Kolben-Anordnung 3, z.B. einen Tandemhauptzylinder, eine mehrere Ventile 41, 42, 43 umfassende Ventil-Anordnung 4, eine elektrisch steuerbare Druckbereitstellungseinrichtung 6 mit einer zweiten Zylinder-Kolben-Anordnung 12, einem Elektromotor 7 und einem Rotations-Translationsgetriebes 9, eine elektronische Steuer- und Regeleinheit 5, einen Bremspedalgefühlsimulator 16 sowie einen Druckmittelvorratsbehälter 8. Die Zylinder-Kolben-Anordnung 3, die Ventil-Anordnung 4 und die Druckbereitstellungseinrichtung 6 sind ganz oder mindestens zum Teil innerhalb eines einzigen gemeinsamen Gehäuses 10 angeordnet. Die Achse 33 des Elektromotors 7 der Druckbereitstellungseinrichtung 6 ist im Wesentlichen senkrecht zur Längsachse 30 der ersten Zylinder-Kolben-Anordnung 3 angeordnet.

Auch die relative Anordnung/Ausrichtung von erster Zylinder-Kolben-Anordnung 3, Ventil-Anordnung 4, Druckbereitstellungseinrichtung 6 (zweiter Zylinder-Kolben-Anordnung 12 und Elektromotor 7), elektronischer Steuer- und Regeleinheit 5, Bremspedalgefühlsimulator 16, hydraulischen Anschlüssen 14, Bremspedalbetätigungsweg-Ermittlungseinrichtung 15 und Druckmittelvorratsbehälter 8 des zweiten Ausführungsbeispiels entspricht im Wesentlichen der Anordnung/Ausrichtung gemäß dem ersten Ausführungsbeispiel. So ist z.B. Elektromotor 7 an der Seitenfläche 20 des Gehäuses 10 und Steuer- und Regeleinheit 5 an der gegenüberliegenden Seitenfläche 21 angeordnet.

Im Unterschied zum ersten Ausführungsbeispiel erstreckt sich das Steuergerätgehäuse 11 beispielsgemäß in X-Richtung und in Z-Richtung über die Seitenfläche 21 hinaus. An der Steuer- und Regeleinheit 5 bzw. an deren Gehäuse 11 sind elektrische Anschlusselemente 17 und 18' angeordnet, z.B. angespritzt. Die Anordnung des elektrischen Anschlusselements 17, welches z.B. zum Anschluss einer Daten- oder Busverbindung zur Signalübertragung an ein anderes Steuergerät oder zur Verbindung mit einem CAN-Bus dient, entspricht der Anordnung wie im ersten Ausführungsbeispiel. Das angespritzte Anschlusselement 18', welches zur elektrischen Stromversorgung der Steuer- und Regeleinheit 5 geeignet ist, ist beispielsgemäß an dem über die Seitenfläche 21 in Z-Richtung hinausstehenden Bereich des Steuergerätgehäuses 11 angeordnet und ist zwischen dem Druckmittelvorratsbehälter 8 und dem Gehäuse 10 angeordnet bzw. verläuft zwischen dem Druckmittelvorratsbehälter 8 und dem Gehäuse 10 (in Richtung auf den Betrachter zu in Fig. 4, parallel zur Elektromotorachse 33). Die Einsteckrichtung des Anschlusselements 18' ist in Richtung parallel der Elektromotorachse 33 (Y-Richtung) ausgerichtet. Das Anschlusselement 18' ist also zwischen der Seitenfläche 24 und dem Bremsflüssigkeitsbehälter 8 angeordnet und die Einsteckrichtung ist parallel zur Seitenfläche 24.

Zur Durchführung des Anschlusselement 18' ist beispielsgemäß eine Ausnehmung im Gehäuse 10 und eine Ausnehmung im Druckmittelvorratsbehälter 8 vorhanden.

Die flächige Ausdehnung der Steuer- und Regeleinheit 5 bzw. deren Gehäuses 11 ist beispielsgemäß etwas größer als die entsprechende Seitenfläche 21 des Gehäuses 10 ausgeführt, so dass in Fig. 4 das hinter dem Gehäuse 10 angeordnete Steuergerätgehäuse 11 in Durchsicht im Bereich der Ausnehmung im Gehäuse 10, zwischen Gehäuse 10 und Druckmittelvorratsbehälter 8 sowie vor dem Gehäuse 10 zuerkennen ist.

Gemäß einem nicht dargestellten Ausführungsbeispiel verläuft bzw. ragt das an der Steuer- und Regeleinheit 5 bzw. deren Gehäuse 11 angespritzte Anschlusselement zur elektrischen Stromversorgung parallel zur Elektromotorachse 33 durch das Gehäuse 10 oder durch den Druckmittelvorratsbehälter 8 hindurch. Zur Durchführung der Steckverbindung ist eine Ausnehmung im Gehäuse 10 oder im Behälter 8 vorgesehen.

## Patentansprüche

1. Bremsbetätigungseinheit (1, 1') für eine Kraftfahrzeugbremsanlage vom Typ "Brake-by-wire" mit
• einem Gehäuse (10),
• einer ersten hydraulischen Zylinder-Kolben-Anordnung (3) mit einem in dem Gehäuse (10) verschiebbar geführten Betätigungskolben, der einen hydraulischen Druckraum begrenzt, an den Radbremsen des Kraftfahrzeugs anschließbar sind, wobei der Betätigungskolben mittels einer Betätigungskräfte übertragenden Druckstange (2) betätigbar ist,
• einer elektrisch steuerbaren Druckbereitstellungseinrichtung (6), welche als eine zweite hydraulische Zylinder-Kolben-Anordnung (12) ausgeführt ist, deren Kolben durch einen Elektromotor (7) mittels eines Rotations-Translationsgetriebes (9) verschiebbar ist, und
• einer Ventil-Anordnung (4) mit einer Anzahl von Ventilen (41, 42, 43) zum Einstellen radindividueller Bremsdrücke und zum Trennen oder Verbinden der Radbremsen mit der ersten Zylinder-Kolben-Anordnung (3) oder mit der Druckbereitstellungseinrichtung (6),
wobei die Ventil-Anordnung (4) und die Druckbereitstellungseinrichtung (6) zumindest teilweise innerhalb des Gehäuses (10) angeordnet sind, wobei die Achse des Elektromotors (7) der Druckbereitstellungseinrichtung (6) im Wesentlichen senkrecht zur Längsachse (30) der ersten Zylinder-Kolben-Anordnung (3) angeordnet ist, **dadurch gekennzeichnet, dass** die Ventil-Anordnung (4) auf einer dem Elektromotor (7) entgegengesetzten, zweiten Seitenfläche (21) des Gehäuses (10) angeordnet ist, und dass der Elektromotor (7) und hydraulische Anschlüsse (14) der Bremsbetätigungseinheit zum Anschließen der Radbremsen an derselben Seitenfläche (20) des Gehäuses (10) angeordnet sind.

2. Bremsbetätigungseinheit nach Anspruch 1, **dadurch gekennzeichnet, dass** die Längsachse (31) der zweiten Zylinder-Kolben-Anordnung (12) der Druckbereitstellungseinrichtung (6) im Wesentlichen senkrecht zu der Längsachse (30) der ersten Zylinder-Kolben-Anordnung (3) angeordnet ist.

3. Bremsbetätigungseinheit nach Anspruch 1 oder 2, **dadurch gekennzeichnet, dass** ein Bremspedalgefühlsimulator (16) zumindest teilweise in dem Gehäuse (10) angeordnet ist, wobei die Längsachse (32) des Bremspedalgefühlsimulator (16) im Wesentlichen senkrecht zu der Längsachse (31) der zweiten Zylinder-Kolben-Anordnung (12) angeordnet ist.

4. Bremsbetätigungseinheit nach einem der Ansprüche 1 bis 3, **dadurch gekennzeichnet,** das eine Bremspedalbetätigungsweg-Ermittlungseinrichtung (15) zumindest teilweise in das Gehäuse (10) integriert ist, wobei die Bremspedalbetätigungsweg-Ermittlungseinrichtung (15) insbesondere durch einen Wegsensor gebildet wird, der den Weg des Betätigungskolbens erfasst.

5. Bremsbetätigungseinheit nach einem der Ansprüche 1 bis 4, **dadurch gekennzeichnet, dass** ein den Druck der ersten Zylinder-Kolben-Anordnung (3) erfassender Drucksensor sowie ein weiterer Drucksensor, der den Druck der Druckbereitstellungseinrichtung (6) erfasst, zumindest teilweise in das Gehäuse (10) integriert sind.

6. Bremsbetätigungseinheit nach einem der Ansprüche 1 bis 5, **dadurch gekennzeichnet, dass** der Elektromotor (7), insbesondere direkt, an einer ersten Seitenfläche (20) des Gehäuses (10) befestigt ist, wobei die Achse des Elektromotors (7) im Wesentlichen senkrecht zur ersten Seitenfläche (20) angeordnet ist, und wobei insbesondere die Größe der ersten Seitenfläche derart ausgeführt ist, dass der Elektromotor (7) auf dem Gehäuse (10) abdichtbar ist.

7. Bremsbetätigungseinheit nach einem der Ansprüche 1 bis 6, **dadurch gekennzeichnet, dass** an einer vierten Seitenfläche (24) des Gehäuses (10) ein unter Atmosphärendruck stehender Druckmittelvorratsbehälter (8) unmittelbar angeordnet ist oder dass an einer vierten Seitenfläche (24) des Gehäuses (10) ein hydraulischer Anschluss für einen unter Atmosphärendruck stehender Druckmittelvorratsbehälter (8) angeordnet ist.

8. Bremsbetätigungseinheit nach einem der Ansprüche 1 bis 7, **dadurch gekennzeichnet, dass** an einer dem Elektromotor (7) entgegengesetzten, zweiten Seitenfläche (21) des Gehäuses (10) eine elektronische Steuer- und Regeleinheit (5) mit einem Steuergerätgehäuse (11) angeordnet ist, wobei sich das Steuergerätgehäuse (11) in zumindest einer Richtung über die zweite Seitenfläche (21) hinaus erstreckt, und wobei insbesondere das Steuergerätgehäuse (11) zumindest einen Teil der Ventil-Anordnung (4) und/oder die Bremspedalbetätigungsweg-Ermittlungseinrichtung (15) und/oder die Drucksensoren bedeckt.

9. Bremsbetätigungseinheit nach Anspruch 8, **dadurch gekennzeichnet, dass** an dem Steuergerätgehäuse (11) zumindest ein elektrisches Anschlusselement (17, 18) angeordnet, insbesondere angespritzt, ist, wobei das elektrische Anschlusselement (17, 18) sich benachbart einer dritten, der Druckstange (2) entgegengesetzten Seitenfläche (23) des Gehäuses (10), insbesondere parallel zur Achse des Elektromotors (7), erstreckt.

10. Bremsbetätigungseinheit nach Anspruch 8 oder 9, **dadurch gekennzeichnet, dass** an dem Steuergerätgehäuse (11) ein elektrisches Anschlusselement (18'), insbesondere zur elektrischen Energieversorgung der elektronischen Steuer- und Regeleinheit (5), angeordnet, insbesondere angespritzt, ist, welches sich durch das Gehäuse (10) oder zwischen dem Gehäuse (10) und dem Druckmittelvorratsbehälter (8) oder durch den Druckmittelvorratsbehälter (8) erstreckt, wobei insbesondere das elektrische Anschlusselement (18') parallel zur Achse des Elektromotors (7) ausgerichtet ist.

11. Bremsbetätigungseinheit nach einem der Ansprüche 1 bis 10, **dadurch gekennzeichnet, dass** die zweite hydraulisehe Zylinder-Kolben-Anordnung (12) der Druckbereitstellungseinrichtung (6) zumindest teilweise aus dem Gehäuse (10) herausragt, wobei insbesondere die zweite hydraulische Zylinder-Kolben-Anordnung (12) von dem Steuergerätgehäuse (11) abgedeckt wird oder sich durch das Steuergerätgehäuse (11) erstreckt.

12. Bremsbetätigungseinheit nach einem der vorhergehenden Ansprüche 1 bis 11, **dadurch gekennzeichnet, dass** das Gehäuse (10) auf seiner Druckstangenseitigen Seitenfläche (22) ein Befestigungselement, insbesondere eine Befestigungsplatte, umfasst, mittels welchem das Gehäuse an einer Spritzwand des Kraftfahrzeugs mechanisch befestigbar ist.

13. Bremsanlage für Kraftfahrzeuge, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist, mit einer Bremsbetätigungseinheit (1, 1') nach einem der Ansprüche 1 bis 12 und einem Bremspedal zum Betätigen der Bremsbetätigungseinheit.

## Claims

1. Brake actuating unit (1, 1') for a motor vehicle brake system of the brake-by-wire type, comprising
• a housing (10),
• a first hydraulic cylinder/piston arrangement (3) having an actuating piston which is guided displaceably in the housing (10) and delimits a hydraulic pressure chamber to which wheel brakes of the motor vehicle are connectable, the actuating piston being actuable by means of a push rod (2) which transmits actuating forces,
• an electrically controllable pressure supplying device (6) which is in the form of a second hydraulic cylinder/piston arrangement (12), the piston of which can be displaced by an electric motor (7) by means of a rotational-translational gear mechanism (9), and
• a valve arrangement (4) comprising a number of valves (41, 42, 43) for setting wheel-individual brake pressures and for disconnecting or connecting the wheel brakes from/to the first cylinder/piston arrangement (3) or from/to the pressure supplying device (6),
wherein the valve arrangement (4) and the pressure supplying device (6) are arranged at least partially inside the housing (10), the axis of the electric motor (7) of the pressure supplying device (6) being arranged substantially perpendicular to the longitudinal axis (30) of the first cylinder/piston arrangement (3), **characterized in that** the valve arrangement (4) is arranged on a second lateral face (21) of the housing (10) opposite the electric motor (7), and the electric motor (7) and hydraulic connections (14) of the brake actuating unit for connecting the wheel brakes are arranged on the same lateral face (20) of the housing (10).

2. Brake actuating unit according to Claim 1, **characterized in that** the longitudinal axis (31) of the second cylinder/piston arrangement (12) of the pressure supplying device (6) is arranged substantially perpendicular to the longitudinal axis (30) of the first cylinder/piston arrangement (3) .

3. Brake actuating unit according to Claim 1 or 2, **characterized in that** a brake pedal feel simulator (16) is arranged at least partially in the housing (10), the longitudinal axis (32) of the brake pedal feel simulator (16) being arranged substantially perpendicular to the longitudinal axis (31) of the second cylinder/piston arrangement (12).

4. Brake actuating unit according to any one of Claims 1 to 3, **characterized in that** a brake pedal actuation travel detecting device (15) is integrated at least partially in the housing (10), the brake pedal actuation travel detecting device (15) being formed, in particular, by a travel sensor which detects the travel of the actuating piston.

5. Brake actuating unit according to any one of Claims 1 to 4, **characterized in that** a pressure sensor which detects the pressure of the first cylinder/piston arrangement (3), and a further pressure sensor which detects the pressure of the pressure supplying device (6), are integrated at least partially in the housing (10).

6. Brake actuating unit according to any one of Claims 1 to 5, **characterized in that** the electric motor (7) is fastened, in particular directly, to a first lateral face (20) of the housing (10), the axis of the electric motor (7) being arranged substantially perpendicular to the first lateral face (20) and, in particular, the size of the first lateral face being implemented in such a way that the electric motor (7) can be sealed to the housing (10).

7. Brake actuating unit according to any one of Claims 1 to 6, **characterized in that** a pressure medium reservoir (8) under atmospheric pressure is arranged directly on a fourth lateral face (24) of the housing (10), or **in that** a hydraulic connection for a pressure medium reservoir (8) under atmospheric pressure is arranged on a fourth lateral face (24) of the housing (10).

8. Brake actuating unit according to any one of Claims 1 to 7, **characterized in that** an electronic control and regulating unit (5) having a control unit housing (11) is arranged on a second lateral face (21) of the housing (10) opposite the electric motor (7), the control unit housing (11) extending beyond the second lateral face (21) in at least one direction and, in particular, the control unit housing (11) covering at least a portion of the valve arrangement (4) and/or the brake pedal actuation travel detecting device (15) and/or the pressure sensors.

9. Brake actuating unit according to Claim 8, **characterized in that** at least one electrical connecting element (17, 18) is arranged, in particular injection-molded, on the control unit housing (11), the electrical connecting element (17, 18) extending, in particular parallel to the axis of the electric motor (7), adjacently to a third lateral face (23) of the housing (10) opposite the push rod (2).

10. Brake actuating unit according to Claim 8 or 9, **characterized in that** an electrical connecting element (18'), in particular for supplying electrical energy to the electronic control and regulating unit (5), is arranged, in particular injection-molded, on the control unit housing (11) and extends through the housing (10) or between the housing (10) and the pressure medium reservoir (8) or through the pressure medium reservoir (8), the electrical connecting element (18') being aligned, in particular, parallel to the axis of the electric motor (7).

11. Brake actuating unit according to any one of Claims 1 to 10, **characterized in that** the second hydraulic cylinder/piston arrangement (12) of the pressure supplying device (6) projects at least partially from the housing (10), the second hydraulic cylinder/piston arrangement (12) in particular being covered by the control unit housing (11) or extending through the control unit housing (11).

12. Brake actuating unit according to any one of the preceding Claims 1 to 11, **characterized in that** the housing (10) includes on its lateral face (22) on the push-rod side a fastening element, in particular a fastening plate, by means of which the housing can be fastened mechanically to a bulkhead of the motor vehicle.

13. Brake system for motor vehicles which, in a brake-by-wire mode, can be activated both by the vehicle driver and independently of the vehicle driver, is preferably operated in the brake-by-wire mode and can be operated in at least one fall-back mode in which only operation by the vehicle driver is possible, which brake system has a brake actuating unit (1, 1') according to any one of Claims 1 to 12 and a brake pedal for actuating the brake actuating unit.

## Revendications

1. Unité d'actionnement de frein (1, 1') pour une installation de frein de véhicule automobile du type "Brake-by-wire" avec
• un boîtier (10),
• un premier ensemble hydraulique cylindre-piston (3) avec un piston d'actionnement guidé de façon coulissante dans le boîtier (10), qui limite une chambre de pression hydraulique à laquelle des freins de roue du véhicule automobile peuvent être raccordés, dans laquelle le piston d'actionnement peut être actionné au moyen d'une tige de poussée (2) transmettant des forces d'actionnement,
• un dispositif de fourniture de pression (6) à commande électrique, qui est réalisé sous la forme d'un deuxième ensemble hydraulique cylindre-piston (12), dont le piston peut être déplacé par un moteur électrique (7) au moyen d'une transmission par rotation-translation (9), et
• un ensemble de soupapes (4) avec un nombre de soupapes (41, 42, 43) pour le réglage de pressions de frein individuelles de roues et pour la séparation ou la communication des freins de roues avec le premier ensemble cylindre-piston (3) ou avec le dispositif de fourniture de pression (6),
l'ensemble de soupapes (4) et le dispositif de fourniture de pression (6) sont disposés au moins partiellement à l'intérieur du boîtier (10), dans laquelle l'axe du moteur électrique (7) du dispositif de fourniture de pression (6) est disposé essentiellement perpendiculairement à l'axe longitudinal (30) du premier ensemble cylindre-piston (3), **caractérisée en ce que** l'ensemble de soupapes (4) est disposé sur une deuxième face latérale (21) du boîtier (10) opposée au moteur électrique (7), et le moteur électrique (7) et des raccords hydrauliques (14) de l'unité d'actionnement de frein pour le raccordement des freins de roues sont disposés sur la même face latérale (20) du boîtier (10).

2. Unité d'actionnement de frein selon la revendication 1, **caractérisée en ce que** l'axe longitudinal (31) du deuxième ensemble cylindre-piston (12) du dispositif de fourniture de pression (6) est disposé essentiellement perpendiculairement à l'axe longitudinal (30) du premier ensemble cylindre-piston (3) .

3. Unité d'actionnement de frein selon la revendication 1 ou 2, **caractérisée en ce qu'**un simulateur de sensation de pédale de frein (16) est disposé au moins partiellement dans le boîtier (10), dans laquelle l'axe longitudinal (32) du simulateur de sensation de pédale de frein (16) est disposé essentiellement perpendiculairement à l'axe longitudinal (31) du deuxième ensemble cylindre-piston (12) .

4. Unité d'actionnement de frein selon l'une quelconque des revendications 1 à 3, **caractérisée en ce qu'**un dispositif de détermination de la course d'actionnement de la pédale de frein (15) est intégré au moins partiellement dans le boîtier (10), dans laquelle le dispositif de détermination de la course d'actionnement de la pédale de frein (15) est formé en particulier par un détecteur de course, qui détecte la course du piston d'actionnement.

5. Unité d'actionnement de frein selon l'une quelconque des revendications 1 à 4, **caractérisée en ce qu'**un capteur de pression détectant la pression du premier ensemble cylindre-piston (3) ainsi qu'un autre capteur de pression, qui détecte la pression du dispositif de fourniture de pression (6), sont intégrés au moins partiellement dans le boîtier (10).

6. Unité d'actionnement de frein selon l'une quelconque des revendications 1 à 5, **caractérisée en ce que** le moteur électrique (7) est fixé, en particulier directement, à une première face latérale (20) du boîtier (10), dans laquelle l'axe du moteur électrique (7) est disposé essentiellement perpendiculairement à la première face latérale (20), et dans laquelle en particulier la grandeur de la première face latérale est réalisée de telle manière que le moteur électrique (7) puisse être rendu étanche sur le boîtier (10).

7. Unité d'actionnement de frein selon l'une quelconque des revendications 1 à 6, **caractérisée en ce qu'**un réservoir de stockage de moyen de pression (8) se trouvant à la pression atmosphérique est disposé immédiatement sur une quatrième face latérale (24) du boîtier (10) ou **en ce qu'**un raccord hydraulique pour un réservoir de stockage de moyen de pression (8) se trouvant à la pression atmosphérique est disposé sur une quatrième face latérale (24) du boîtier (10).

8. Unité d'actionnement de frein selon l'une quelconque des revendications 1 à 7, **caractérisée en ce qu'**une unité de commande et de régulation électronique (5) avec un boîtier d'appareil de commande (11) est disposée sur une deuxième face latérale (21) du boîtier (10) opposée au moteur électrique (7), dans laquelle le boîtier d'appareil de commande (11) s'étend dans au moins une direction au-delà de la deuxième face latérale (21), et dans laquelle en particulier le boîtier d'appareil de commande (11) recouvre au moins une partie de l'ensemble de soupapes (4) et/ou le dispositif de détermination de la course d'actionnement de la pédale de frein (15) et/ou les capteurs de pression.

9. Unité d'actionnement de frein selon la revendication 8, **caractérisée en ce qu'**au moins un élément de raccordement électrique (17, 18) est disposé, en particulier projeté, sur le boîtier d'appareil de commande (11), dans laquelle l'élément de raccordement électrique (17, 18) s'étend à proximité d'une troisième face latérale (23) du boîtier (10), opposée à la tige de poussée (2), en particulier parallèlement à l'axe du moteur électrique (7).

10. Unité d'actionnement de frein selon la revendication 8 ou 9, **caractérisée en ce qu'**un élément de raccordement électrique (18'), en particulier pour l'alimentation en énergie électrique de l'unité de commande et de régulation électronique (5), est disposé, en particulier projeté, sur le boîtier d'appareil de commande (11), lequel s'étend à travers le boîtier (10) ou entre le boîtier (10) et le réservoir de stockage de moyen de pression (8) ou à travers le réservoir de stockage de moyen de pression (8), dans laquelle en particulier l'élément de raccordement électrique (18') est orienté parallèlement à l'axe du moteur électrique (7).

11. Unité d'actionnement de frein selon l'une quelconque des revendications 1 à 10, **caractérisée en ce que** le deuxième ensemble hydraulique cylindre-piston (12) du dispositif de fourniture de pression (6) sort au moins partiellement hors du boîtier (10), dans laquelle en particulier le deuxième ensemble hydraulique cylindre-piston (12) est recouvert par le boîtier d'appareil de commande (11) ou s'étend à travers le boîtier d'appareil de commande (11).

12. Unité d'actionnement de frein selon l'une quelconque des revendications précédentes 1 à 11, **caractérisée en ce que** le boîtier (10) comprend sur sa face latérale (22) côté tige de poussée un élément de fixation, en particulier une plaque de fixation, au moyen duquel le boîtier peut être fixé mécaniquement à un tablier d'auvent du véhicule automobile.

13. Installation de frein pour des véhicules automobiles, qui peut être commandée dans un mode de fonctionnement "Brake-by-wire" aussi bien par le conducteur du véhicule qu'indépendamment du conducteur de véhicule, qui est de préférence commandée dans le mode de fonctionnement "Brake-by-wire" et qui peut être commandée dans au moins un mode de fonctionnement antérieur, dans lequel seule la commande par le conducteur du véhicule est possible, avec une unité d'actionnement de frein (1, 1') selon l'une quelconque des revendications 1 à 12 et une pédale de frein pour actionner l'unité d'actionnement de frein.
